# EUROPÄISCHE PATENTSCHRIFT

(11) **EP 2 138 267 B1**
(45) Veröffentlichungstag und Bekanntmachung des Hinweises auf die Patenterteilung: **18.05.2011**
(21) Anmeldenummer: 08157850.2
(22) Anmeldetag: 09.06.2008
(51) Int. Cl.: B23Q 11/00, B23Q 37/00, F16F 15/26

(54) **Bearbeitungsaggregat zum Bearbeiten von Werkstücken**
Workpieces machining unit
Unité d'usinage de pièces

(43) Veröffentlichungstag der Anmeldung: 30.12.2009
(73) Patentinhaber: Homag Holzbearbeitungssysteme AG, 72296 Schopfloch (DE)
(72) Erfinder: Rathgeber, Peter, 72280 Dornstetten (DE)
(74) Vertreter: HOFFMANN EITLE

(56) Entgegenhaltungen:
- EP-A- 0 893 198
- EP-A- 1 188 512
- EP-A- 1 312 441
- EP-A- 1 724 054
- WO-A-2006/075209
- CH-A- 427 442
- DE-A1- 3 120 190
- DE-A1- 10 040 882

## Beschreibung

### Technisches Gebiet

Die vorliegende Erfindung betrifft ein Bearbeitungsaggregat zum Bearbeiten von Werkstücken, die vorzugsweise zumindest teilweise Holz, Holzwerkstoffe, Kunststoff oder dergleichen umfassen, sowie eine Bearbeitungsmaschine, die dieses Bearbeitungsaggregat umfasst und ein Verfahren zum Bearbeiten von Werkstücken mit einem derartigen Bearbeitungsaggregat.

### Stand der Technik

Bei der maschinellen Bearbeitung von Werkstücken, beispielsweise im Bereich der Holzbearbeitung, kommt es häufig aufgrund der im Zuge der Werkstückbearbeitung beschleunigten und abgebremsten Massen zu erheblichen Schwingungen. Derartige Schwingungen werden beispielsweise durch hochdynamische Einsatzbewegungen von Fräsaggregaten oder Kappschervorgänge beim Trennen eines Kantenbands an dem jeweiligen Werkstück verursacht. Diese Schwingungen können beispielsweise zu einem frühzeitigen Ausfall der Mechanik oder einem inakzeptablen Fräsergebnis führen. Weiterhin gerät die gesamte Bearbeitungsmaschine durch die Erregung in Schwingungen, wodurch bei einer weiteren Bearbeitung, insbesondere einer statischen Fräsbearbeitung, Rattermarken am Werkstück erzeugt werden können.

Zur Verringerung der oben erwähnten Schwingungen, werden derzeit die dynamischen Bewegungen über Dämpfungsmechanismen an den Umkehrpunkten gemindert. Aufgrund der hohen Dynamik und der Taktzahl sind diese Dämpfungsmechanismen jedoch nur unzureichend, wenn überhaupt, in der Lage die Schwingungen zu vermindern.

Zur Verbesserung der Laufruhe von Bearbeitungsmaschinen ist es weiterhin bekannt, einen Massenausgleich vorzunehmen. Beispielsweise offenbart die schweizerische Patentschrift CH 427 442 eine Vorrichtung für den Massenausgleich bei durch Kurbeltrieb angetriebenen Maschinen. Bei dieser Vorrichtung sind Ausgleichsgewichte beidseitig der Kurbelwelle vorgesehen, die entgegengesetzt zum Maschinenhub bewegt werden, um einen Ausgleich der oszillierenden Massen zu erzielen. Diese Art des Massenausgleichs ist jedoch auf Kurbeltriebe beschränkt.

Ferner ist aus der DE 100 40 882 A1 eine Bearbeitungsmaschine zur Oberflächenbehandlung mit einem Exzenterantrieb bekannt, wobei eine Ausgleichsmasse eines Ausgleichsexzenters entgegengesetzt zum Exzenterantrieb bewegt wird, um die Unwucht des Exzenterantriebs auszugleichen. Bei dieser Vorrichtung ist jedoch die Ausgleichsmasse integriert mit dem Ausgleichsexzenter sowie dem Antriebsexzenter auf einer Antriebswelle befestigt, so dass für einen Austausch des Ausgleichsgewichts eine vollständige Demontage des Antriebsmechanismus erforderlich ist.

Als weiterer Stand der Technik ist das Dokument EP 1 312 441 A1 bekannt, dass eine Vorrichtung mit schwingungsunterdrückender Struktur bereitstellt. Als sich bewegende Einheit ist ein Spindelkopf vorgesehen, und ein die gleiche Masse aufweisendes Gegengewicht.

Ebenso ist das gattungsbildende Dokument EP 1 724 054 A1 bekannt, worin eine schwingungsarme Bearbeitungsvorrichtung offenbart wird.

Es ist ein Gegengewicht vorgesehen, dessen Masse exakt der auszugleichenden Masse entspricht.

Als weiterer Stand der Technik ist EP 1 188 512 A1 aufzuführen, worin eine Bearbeitungsvorrichtung mit einem Gegengewicht dargelegt wird, wobei das Gegengewicht ein oszillierendes System mit dem auszugleichenden Gleiter ausbildet.

### Garstellung der Erfindung

Es ist daher eine Aufgabe der vorliegenden Erfindung, eine im Wesentlichen nicht schwingungsbehaftete Bearbeitung von Werkstücken zu ermöglichen, wobei der Antrieb des Schwingungsausgleiches nicht auf eine bestimmte Antriebsart beschränkt ist und ohne großen Aufwand an wechselnde Erfordernisse bei der Bearbeitung von Werkstücken angepasst werden kann.

Diese Aufgabe wird durch ein Bearbeitungsaggregat mit den Merkmalen des Anspruchs 1, eine Bearbeitungsmaschine mit den Merkmalen des Anspruchs 13 sowie ein Verfahren mit den Merkmalen des Anspruchs 16 gelöst. Besonders vorteilhafte Weiterbildungen der Erfindung sind in den abhängigen Ansprüchen angegeben.

Der Erfindung liegt der Gedanke zugrunde, mit einem geringen konstruktiven Aufwand einen effektiven und flexiblen Schwingungsausgleich für Bearbeitungseinrichtungen mit unterschiedlichen Antrieben bereitzustellen. Zu diesem Zweck wird gemäß einem Aspekt der Erfindung ein Bearbeitungsaggregat zum Bearbeiten von Werkstücken, die vorzugsweise zumindest teilweise Holz, Holzwerkstoffe, Kunststoff oder dergleichen bereitgestellt. Das erfindungsgemäße Bearbeitungsaggregat umfasst einen Bearbeitungsschlitten, der verfahrbar an dem Bearbeitungsaggregat angeordnet ist, wobei der Bearbeitungsschlitten zumindest ein Bearbeitungswerkzeug und zumindest eine Antriebsvorrichtung zum Antreiben des zumindest einen Bearbeitungswerkzeugs aufweist. Ferner umfasst das Bearbeitungsaggregat einen Ausgleichsschlitten, der ebenfalls verfahrbar an dem Bearbeitungsaggregat angeordnet ist, wobei der Ausgleichsschlitten zumindest ein Ausgleichsgewicht umfasst, wobei beispielsweise die Masse des Ausgleichsschlittens im Wesentlichen derjenigen des Bearbeitungsschlittens entspricht, und die Masse des Ausgleichsgewichts im Wesentlichen derjenigen des Bearbeitungswerkzeugs und der Antriebsvorrichtung entspricht. Insgesamt sollen sich die bewegten Massen ausgleichen. Weiterhin ist zumindest eine Hauptantriebsvorrichtung zum Antreiben des Bearbeitungsschlittens und des Ausgleichsschlittens vorgesehen, wobei die zumindest eine Hauptantriebsvorrichtung ausgestaltet ist, den Bearbeitungsschlitten und den Ausgleichsschlitten im Wesentlichen gleichzeitig in um 180° zueinander versetzte Richtungen an dem Bearbeitungsaggregat zu verfahren.

Gemäß der Erfindung ist die zumindest eine Hauptantriebsvorrichtung als Kurbeltrieb ausgestaltet. Ein Kurbeltrieb wird vielfach bei einsatzgesteuerten Aggregaten verwendet, und stellt eine Alternative zu dem oben erwähnten Linearantrieb dar.

Weiter ist eine Hauptantriebsvorrichtung vorgesehen, die eine antreibbare Welle umfasst, und wobei ein Bearbeitungsschlitten-Exzenter zur Verbindung mit dem Bearbeitungsschlitten und ein Ausgleichsschlitten-Exzenter zur Verbindung mit dem Ausgleichsschlitten um 180° zueinander versetzt an der Welle angeordnet sind. Die Welle ist vorzugsweise über eine Kupplung mit der Hauptantriebsvorrichtung verbunden. Der Bearbeitungsschlitten-Exzenter und der Ausgleichsschlitten-Exzenter weisen hierbei vorzugsweise im Wesentlichen die gleichen Massen auf. Durch den Kurbeltrieb wird eine sinusförmige Bewegung erzeugt, die hochdynamisch abläuft. Wenn sich auf diesem Kurbeltrieb ein gegenläufiges Kurbeltriebsystem um 180° phasenverschoben mit im Wesentlichen den gleichen Massen bewegt, heben sich die Kräfte, die das Gesamtsystem erregen, auf. Somit ist eine im Wesentlichen nicht schwingungsbehaftete Bearbeitung von Werkstücken möglich, die zu einer Verbesserung der Qualität der bearbeiteten Werkstücke führt.

Der Bearbeitungsschlitten und der Ausgleichsschlitten sind jeweils verfahrbar an dem Bearbeitungsaggregat angeordnet. Hierbei können die Schlitten beispielsweise linear verfahrbar sein, wobei die Schlitten in X-Richtung (Richtung der Längserstreckung des Bearbeitungsaggregats) oder auch in Y-Richtung (Richtung senkrecht zur Längserstreckung des Bearbeitungsaggregats) verfahrbar angeordnet sein können. Eine lineare Verfahrbarkeit in X-Richtung wird beispielsweise bei einem Bearbeitungsaggregat zur horizontalen Bearbeitung von Werkstücken in Erwägung gezogen, wobei bei einem Bearbeitungsaggregat zur vertikalen Bearbeitung von Werkstücken beispielsweise eine lineare Verfahrbarkeit in Y-Richtung in Erwägung gezogen wird. Die Art der Verfahrbarkeit ist jedoch nicht auf eine lineare Verfahrbarkeit beschränkt. Vielmehr wird auch eine kreis- bzw. bogenförmige Verfahrbarkeit in Erwägung gezogen, wobei die Schlitten bei einer Werkstückbearbeitung in die X-und/oder Y-Richtung verfahren werden können.

Durch den effektiven Schwingungsausgleich verlängert sich die Lebensdauer der Aggregate erheblich. Ferner wird die Qualität der bearbeiteten Werkstücke durch den Schwingungsausgleich verbessert. So zeigen z.B. Fräsergebnisse wesentlich weniger Rattermarken vom einsatzgesteuerten Bearbeitungsaggregat noch von weiteren Aggregaten, die auf dem Rahmen einer Maschine sitzen. Bei dem Massenausgleich von dynamischen Kappscheren von Kantenrollentrenneinrichtungen kommt weiterhin der Vorteil hinzu, dass die Schneidwirkung durch die zusätzliche Ausgleichsmasse verbessert wird. Das heißt, hier können mit dem gleichen Antrieb größere Kantenquerschnitte getrennt werden, ohne dass über den Antrieb Schwingungen an die mechanische Umgebung abgegeben werden.

Der Bearbeitungsschlitten und der Ausgleichsschlitten werden durch zumindest eine Hauptantriebsvorrichtung an dem Bearbeitungsaggregat verfahren, wobei die zumindest eine Hauptantriebsvorrichtung ausgestaltet ist, den Bearbeitungsschlitten und den Ausgleichsschlitten im Wesentlichen gleichzeitig in um 180° zueinander versetzte Richtungen an dem Bearbeitungsaggregat zu verfahren. Die Art des Antriebs ist hierbei nicht auf eine bestimmte Antriebsart beschränkt. Vielmehr kann eine oder mehrere beliebige Antriebsvorrichtungen verwendet werden, solange sie in der Lage ist/sind, den Bearbeitungsschlitten und den Ausgleichsschlitten im Wesentlichen gleichzeitig in um 180° zueinander versetzte Richtungen an dem Bearbeitungsaggregat zu verfahren.

Das Ausgleichsgewicht ist an dem Ausgleichsschlitten angeordnet, so dass auf das Ausgleichsgewicht leicht zugegriffen und es ohne großen Aufwand ausgetauscht werden kann. Hierdurch kann das Bearbeitungsaggregat ohne großen Aufwand an wechselnde Erfordernisse bei der Bearbeitung von Werkstücken angepasst werden. Eine derartige Anpassung kann beispielsweise erforderlich werden, wenn eine Antriebsvorrichtung, beispielsweise ein Motor, zum Antreiben des Bearbeitungswerkzeugs ausgetauscht wird. Bei der Werkstückbearbeitung mit unterschiedlichen Bearbeitungswerkzeugen können Antriebsvorrichtungen mit unterschiedlichen Leistungen erforderlich sein, die wiederum unterschiedliche Gewichte aufweisen. In einem derartigen Fall kann das Ausgleichsgewicht an dem Ausgleichsschlitten, ohne dass beispielsweise die gesamte Antriebsvorrichtung demontiert werden muss, einfach ausgetauscht und an die veränderten Massebedingungen angepasst werden. Auf diese wird eine flexible Anpassung an wechselnde Erfordernisse bei der Bearbeitung von Werkstücken ermöglicht, und dennoch eine im Wesentlichen nicht schwingungsbehaftete Bearbeitung von Werkstücken sichergestellt.

Gemäß einer Weiterbildung der Erfindung sind an dem Bearbeitungsaggregat separate Führungsbahnen für den Bearbeitungsschlitten und den Ausgleichsschlitten vorgesehen, an denen der Bearbeitungsschlitten beziehungsweise der Ausgleichsschlitten verfahrbar angeordnet sind. Der Begriff Führungsbahn umfasst eine oder mehrere Führungseinrichtungen, wie beispielsweise Führungsschienen, auf der/denen die Schlitten verfahren werden können. Je nach Ausgestaltung der zumindest einen Hauptantriebsvorrichtung zum Antreiben der Schlitten ist es jedoch auch denkbar, lediglich eine Führungsbahn für den Bearbeitungsschlitten und den Ausgleichsschlitten vorzusehen, auf der die Schlitten in zueinander um 180° versetzte Richtungen verfahren werden. Durch die Führung auf Führungsbahnen können die Schlitten zuverlässig und mit hoher Laufruhe in zueinander um 180° versetzte Richtungen verfahren werden, so dass eine im Wesentlichen nicht schwingungsbehaftete Werkstückbearbeitung sichergestellt werden kann.

Vorzugsweise ist der Ausgleichsschlitten mit zumindest einer Verbindungseinrichtung zum lösbaren Anbringen von Ausgleichsgewichten unterschiedlicher Massen versehen. Durch das Vorsehen einer Verbindungseinrichtung zum lösbaren Anbringen von Ausgleichsgewichten unterschiedlicher Massen kann das Bearbeitungsaggregat besonders einfach an wechselnde Betriebserfordernisse angepasst werden, beispielsweise wenn ein Austausch der Antriebsvorrichtung für das Bearbeitungswerkzeug erforderlich ist. Die unterschiedlichen Massen unterschiedlicher Antriebsvorrichtungen für das Bearbeitungswerkzeug können somit besonders effizient und einfach ausgeglichen werden. Hierbei ist es möglich, ein Ausgleichsgewicht durch ein anderes Ausgleichsgewicht mit anderem Gewicht zu ersetzen oder auch mehrere Ausgleichsgewichte nach dem "Hantel-Prinzip" an dem Ausgleichsschlitten anzuordnen. Je nach Ausgestaltung des Ausgleichsgewichts kann es hierbei vorteilhaft sein, eine oder mehrere Verbindungseinrichtungen vorzusehen. Solange das Ausgleichsgewicht sicher an dem Ausgleichsschlitten befestigt werden kann, ist es ausreichend, auch lediglich eine Verbindungseinrichtung an dem Ausgleichsschlitten anzuordnen.

Die zumindest eine Verbindungseinrichtung kann in Form eines Keils ausgeführt sein, der an dem Ausgleichsschlitten angeordnet ist, wobei das Ausgleichsgewicht zumindest eine Nut aufweist, so dass das Ausgleichsgewicht auf den Ausgleichsschlitten aufgeschoben werden kann. Die spezielle Ausgestaltung einer derartigen Keil-Nut-Verbindung ist hierbei nicht beschränkt, vielmehr kann jede geeignete Keil-Nut-Verbindung angewandt werden. Der Keil kann hierbei beispielsweise eine im Wesentlichen rechteckige Form oder eine sich verjüngende Form aufweisen. Ebenfalls ist es denkbar, mehrere derartiger Keil-Nut-Verbindungen zu verwenden, die sich vorzugsweise parallel zueinander erstrecken. Weiterhin ist eine zusätzliche Befestigung des Ausgleichsgewichts an dem Ausgleichsschlitten denkbar, beispielsweise mittels einer Verschraubung des Ausgleichsgewichts an einer oder mehreren Stellen an dem Ausgleichsschlitten. Hierdurch ist es möglich, das Ausgleichsgewicht sicher an dem Ausgleichsschlitten zu befestigen und dennoch eine einfache Austauschbarkeit des Ausgleichsgewichts sicherzustellen.

Ferner kann die zumindest eine Verbindungseinrichtung als Bolzen ausgeführt sein, der an dem Ausgleichsschlitten angeordnet ist, wobei das Ausgleichsgewicht zumindest eine Bohrung aufweist, so dass das Ausgleichsgewicht mittels des Bolzens auf das Ausgleichsgewicht aufgesetzt werden kann. Der Bolzen kann an einem Ende, das dem Ausgleichsschlitten abgewandt ist, ein Außengewinde aufweisen, so dass das Ausgleichsgewicht mit einer Mutter an dem Ausgleichsschlitten festgeschraubt werden kann. Weiterhin kann der Bolzen einteilig mit dem Ausgleichsschlitten vorgesehen werden oder kann an Ausgleichsschlitten auf geeignete Art und Weise befestigt, z.B. angeschraubt bzw. angeschweißt, werden. Die Ausgestaltung ist hierbei nicht auf einen Bolzen beschränkt. Es können auch mehrere Verbindungseinrichtungen in Form von Bolzen vorgesehen sein, die an voneinander beabstandeten Positionen an dem Ausgleichsschlitten angeordnet sind, wobei das Ausgleichsgewicht mehrere Bohrungen aufweisen kann, die den jeweiligen Positionen der Bolzen entsprechen. Eine Verbindungseinrichtung in Form eines Bolzens kann beispielsweise vorgesehen werden, wenn das Ausgleichsgewicht kreisförmig ausgeführt ist, wobei bei rechteckiger Ausgestaltung des Ausgleichsgewichts vorzugsweise mehrere Bolzen an dem Ausgleichsschlitten angeordnet sind.

Vorteilhafterweise ist das Bearbeitungswerkzeug ausgestaltet, eine Hauptbewegung in horizontaler Richtung, vertikaler Richtung oder einer beliebigen dazwischen liegenden Richtung auszuführen. Unter einer Bewegung in horizontaler Richtung wird hierbei eine Bewegung in Richtung der Längserstreckung des Bearbeitungsaggregats verstanden, und eine Bewegung in vertikale Richtung erfolgt senkrecht zu der Bewegung in Richtung der Längserstreckung des Bearbeitungsaggregats. Die Richtung der Hauptbewegung des Bearbeitungswerkzeugs ist jedoch nicht auf eine horizontale oder vertikale Bewegung beschränkt. Vielmehr kann die Hauptbewegung des Bearbeitungswerkzeugs auch in jede dazwischen liegende Richtung ausgeführt werden. Vorzugsweise kann die Bewegung des Bearbeitungswerkzeugs in einem Bereich zwischen 0° und 180° zur Horizontalen ausgeführt werden. Es ist jedoch auch denkbar, dass das Bearbeitungswerkzeug Bewegungen in einem Bereich größer als 180° ausführen kann, beispielsweise wenn das Bearbeitungswerkzeug zusätzlich um seine Mittelachse schwenkbar angeordnet ist. Die Hauptbewegung des Bearbeitungswerkzeugs kann somit auf unterschiedlichste Arten durchgeführt werden, und beispielsweise linear, kreisförmig und/oder bogenförmig ausgeführt werden. Durch die Ausgestaltung des Bearbeitungswerkzeugs, derart, dass es eine Hauptbewegung in horizontaler Richtung, vertikaler Richtung oder einer beliebigen dazwischen liegenden Richtung ausführen kann, ist es möglich unterschiedlichste Arten der Bearbeitung von Werkstücken, beispielsweise Fräs- oder Kappschervorgänge, durchzuführen. Weiterhin ist es denkbar, dass das Bearbeitungswerkzeug zusätzlich zu seiner Hauptbewegung Nebenbewegungen ausführt. Beispielsweise kann ein Fräswerkzeug zusätzlich zu seiner Hauptbewegung kreisförmige Nebenbewegungen um seine Mittelachse ausführen. Vorteilhafterweise sind der Bearbeitungsschlitten-Exzenter und der Ausgleichsschlitten-Exzenter jeweils mittels einer Welle-Nabe-Verbindung an der Welle angeordnet, und die Welle-Nabe-Verbindung des Bearbeitungsschlitten-Exzenters ist um 180° versetzt zu der Welle-Nabe-Verbindung des Ausgleichsschlitten-Exzenters an der Welle angeordnet. Mittels einer Welle-Nabe-Verbindung ist es möglich, die jeweiligen Exzenter lagegenau um 180° versetzt an der Welle auszurichten. Beispielsweise wird die Welle-Nabe-Verbindung in Form einer Passfeder-Verbindung realisiert, ist aber nicht hierauf beschränkt. Es kann jede geeignete Art von Welle-Nabe-Verbindungen angewandt werden.

Gemäß einer erfindungsgemäßen Ausführungsform sind der Bearbeitungsschlitten-Exzenter und der Ausgleichsschlitten-Exzenter jeweils, vorzugsweise mittels einer Spannverbindung, verdrehfest und in Längsrichtung der Welle unverschiebbar an der Welle angeordnet. Dadurch ist es möglich, eine sichere und lagegenaue Anordnung der jeweiligen Exzenter an der Welle vorzusehen. Die Spannverbindung wird beispielsweise in Form einer Spannhülse realisiert, ist aber nicht hierauf beschränkt. Vielmehr kann jede geeignete Art von Spannverbindungen angewandt werden.

Vorzugsweise ist der Bearbeitungsschlitten-Exzenter über eine erste Kurbelschwinge mit dem Bearbeitungsschlitten verbunden, und der Ausgleichsschlitten-Exzenter ist über eine zweite Kurbelschwinge mit dem Ausgleichsschlitten verbunden, wobei die erste und die zweite Kurbelschwinge jeweils über ein Lager an dem jeweiligen Exzenter und drehbar an dem jeweiligen Schlitten angeordnet sind. Hierdurch ist es möglich, auch bei einem Kurbeltrieb, die jeweiligen Schlitten an dem Bearbeitungsaggregat beispielsweise sogar linear zu verfahren.

Anstelle eines einzelnen Kurbeltriebs zum Antreiben des Bearbeitungsschlittens und des Ausgleichsschlittens, können jedoch auch zwei separate Kurbeltriebe vorgesehen werden. In diesem Fall dient ein erster Kurbeltrieb dem Antreiben des Bearbeitungsschlittens, und ein zweiter Kurbeltrieb dient dem Antreiben des Ausgleichsschlittens.

Gemäß einem weiteren Aspekt der vorliegenden Erfindung wird eine Bearbeitungsmaschine zum Bearbeiten von Werkstücken, die vorzugsweise zumindest teilweise Holz, Holzwerkstoffe, Kunststoff oder dergleichen umfassen, bereitgestellt. Die Bearbeitungsmaschine umfasst eine Bearbeitungsvorrichtung und das erfindungsgemäße Bearbeitungsaggregat. Die Bearbeitungsvorrichtung kann beispielsweise in Form eines Ständers, wie zum Beispiel ein F-Ständer, ausgeführt sein. Das Bearbeitungsaggregat kann direkt oder indirekt an der Bearbeitungsvorrichtung angeordnet sein. Bei einer indirekten Anordnung des Bearbeitungsaggregats an der Bearbeitungsvorrichtung, können zusätzlich an der Bearbeitungsvorrichtung noch ein oder mehrere Schlitten angeordnet sein. Beispielsweise kann die Bearbeitungsvorrichtung einen Vertikalschlitten aufweisen, der an ihr in vertikaler Richtung (in Richtung der Höhenerstreckung) verfahrbar angeordnet ist. An dem Vertikalschlitten kann das Bearbeitungsaggregat oder ein weiterer Schlitten angeordnet sein. Beispielsweise kann dieser weitere Schlitten als Horizontalschlitten ausgestaltet sein, der an dem Vertikalschlitten in horizontaler Richtung, d.h. im Wesentlichen senkrecht zu der vertikalen Richtung, verfahrbar angeordnet ist. An diesem Horizontalschlitten kann das Bearbeitungsaggregat verfahrbar angeordnet sein. Das Bearbeitungsaggregat kann somit auf unterschiedlichste Arten an der Bearbeitungsvorrichtung angeordnet sein, was einen flexiblen Einsatz des Bearbeitungsaggregats mit unterschiedlichsten Bearbeitungsvorrichtungen ermöglicht.

Vorzugsweise weist die Bearbeitungsvorrichtung zumindest eine Führungsbahn auf, an welcher das Bearbeitungsaggregat verfahrbar angeordnet ist. Hierbei kann das Bearbeitungsaggregat entweder direkt oder indirekt, beispielsweise über den/die oben erwähnten zusätzlichen Schlitten, an der Bearbeitungsvorrichtung angeordnet werden. Die Führungsbahn kann wiederum eine oder mehrere Führungseinrichtungen, wie beispielsweise Führungsschienen, umfassen, auf der das Bearbeitungsaggregat direkt oder indirekt mittels zumindest einem zusätzlichen Schlitten verfahren werden kann. Durch das Vorsehen zumindest einer Führungsbahn kann das Bearbeitungsaggregat sicher und zuverlässig an der Bearbeitungsvorrichtung verfahren werden.

Gemäß einer vorteilhaften Weiterbildung der Erfindung ist die Bearbeitungsmaschine eine Durchlaufmaschine. Bei einer Durchlaufmaschine wird ein zu bearbeitendes Werkstück, beispielsweise mittels Förderbändern, an der ortsfest installierten Bearbeitungsvorrichtung vorbei geführt. Durch die erfindungsgemäße verfahrbare Anordnung des Bearbeitungsaggregats an der Bearbeitungsvorrichtung, ist es somit auch bei Durchlaufmaschinen möglich, einen effektiven Schwingungsausgleich vorzusehen. Gemäß einer anderen vorteilhaften Weiterbildung der Erfindung ist die Bearbeitungsmaschine als CNC-Maschine (Stationärmaschine) ausgestaltet.

Gemäß noch einem anderen Aspekt der vorliegenden Erfindung wird ein Verfahren bereitgestellt, zum Bearbeiten von Werkstücken, die vorzugsweise zumindest teilweise Holz, Holzwerkstoffe, Kunststoff oder dergleichen umfassen, mit dem erfindungsgemäßen Bearbeitungsaggregat. Bei dem Verfahren werden, bei der Bearbeitung eines Werkstücks, der Bearbeitungsschlitten und der Ausgleichsschlitten im Wesentlichen gleichzeitig in um 180° zueinander versetzte Richtungen durch die zumindest eine Hauptantriebsvorrichtung verfahren. Durch das erfindungsgemäße Verfahren kann eine im Wesentlichen nicht schwingungsbehaftete Bearbeitung von Werkstücken sichergestellt werden, wodurch die Qualität des bearbeiteten Werkstücks verbessert wird.

### Kurze Beschreibung der Zeichnungen

Fig. 1 zeigt eine Perspektivansicht eines Bearbeitungsaggregats gemäß der vorliegenden Erfindung;
Fig. 2 zeigt eine schematische Vorderansicht des erfindungsgemäßen Bearbeitungsaggregats; und
Fig. 3 zeigt eine Perspektivansicht einer Bearbeitungsmaschine gemäß der vorliegenden Erfindung.

### Ausführliche Beschreibung bevorzugter Ausführungsformen

Bevorzugte Ausführungsformen der vorliegenden Erfindung werden nachfolgend ausführlich unter Bezugnahme auf die beigefügten Zeichnungen beschrieben.

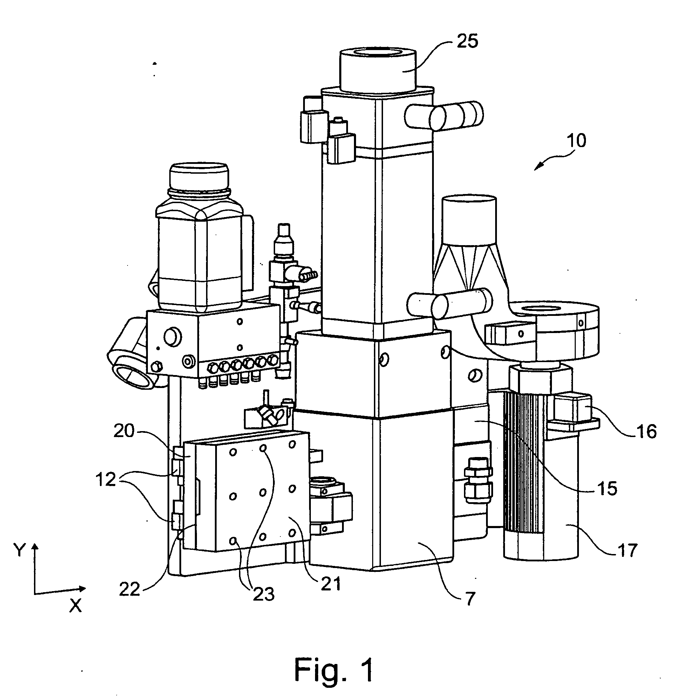

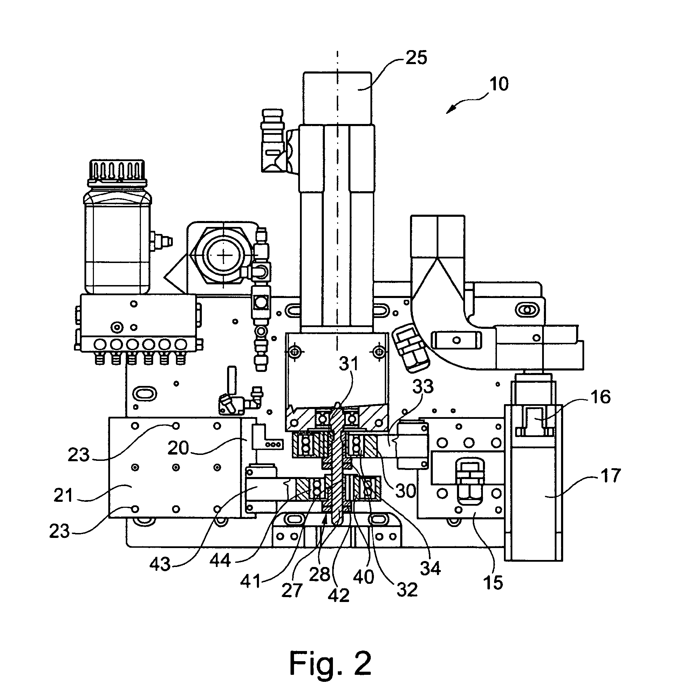

Hierbei zeigt Fig. 1 eine Perspektivansicht eines Bearbeitungsaggregats 10 gemäß einer Ausführungsform der vorliegenden Erfindung. An dem Bearbeitungsaggregat 10 ist eine Hauptantriebsvorrichtung 25 in Form eines Kurbeltriebs 27 (siehe Fig. 2) vorgesehen. Ferner sind an dem Bearbeitungsaggregat 10 ein Bearbeitungsschlitten 15 und ein Ausgleichsschlitten 20 angeordnet. Der Bearbeitungsschlitten 15 und der Ausgleichsschlitten 20 weisen im Wesentlichen die gleiche Masse auf. Wie Fig. 1 ferner zu entnehmen ist, sind an dem Bearbeitungsschlitten 15 ein Bearbeitungswerkzeug 16, wie beispielsweise ein Fräser oder eine Kappschere, sowie eine Antriebsvorrichtung 17 zum Antreiben des Bearbeitungswerkzeugs 16 angeordnet. Die Antriebsvorrichtung 17 kann das Bearbeitungswerkzeug 16 derart antreiben, dass das Bearbeitungswerkzeug 16 eine Hauptbewegung in horizontaler Richtung, vertikaler Richtung oder einer beliebigen dazwischen liegenden Richtung ausführen kann. Die horizontale Richtung entspricht hierbei der Richtung X der Längserstreckung des Bearbeitungsaggregats 10, und die vertikale Richtung entspricht hierbei der Richtung Y senkrecht zur Längserstreckung des Bearbeitungsaggregats 10.

An dem Ausgleichsschlitten 20 ist ein Ausgleichsgewicht 21 angeordnet, dessen Masse im Wesentlichen derjenigen der Antriebsvorrichtung 17 und des Bearbeitungswerkzeugs 16 entspricht. Bei einer Werkstückbearbeitung werden der Bearbeitungsschlitten 15 und der Ausgleichsschlitten 20 durch die Hauptantriebsvorrichtung 25 im Wesentlichen gleichzeitig in um 180° zueinander versetzte Richtungen an dem Bearbeitungsaggregat 10 verfahren.

Bei der in Fig. 1 gezeigten Ausführungsform ist der Ausgleichsschlitten 20 über zwei Führungsbahnen 12 verfahrbar an dem Bearbeitungsaggregat 10 angeordnet. Das Ausgleichsgewicht 21 ist mittels einer Verbindungseinrichtung an dem Ausgleichsschlitten 20 angebracht, wobei die Verbindungseinrichtung bei der dargestellten beispielhaften Ausführungsform als Keil-Nut-Verbindung 22 ausgestaltet ist. Hierzu ist an dem Ausgleichsschlitten 20 ein keilförmiger Vorsprung angeordnet, während das Ausgleichsgewicht 21 eine entsprechende Nut aufweist, so dass das Ausgleichsgewicht 21 auf den Ausgleichsschlitten 20 aufgeschoben werden kann. Weiterhin ist das Ausgleichsgewicht 21 zusätzlich über Schrauben 23 an dem Ausgleichsschlitten 20 befestigt, so dass ein Lösen des Ausgleichsgewichts 21 von dem Ausgleichsschlitten 20 auch bei hochdynamischen Bewegungen des Schlittens 20 verhindert werden kann.

In Fig. 1 ist die als Kurbeltrieb 27 ausgeführte Hauptantriebsvorrichtung 25 durch ein Gehäuse abgedeckt. Fig. 2 zeigt eine schematische Vorderansicht des erfindungsgemäßen Bearbeitungsaggregats, ähnlich Fig. 1, wobei in Fig. 2 die als Kurbeltrieb 27 ausgeführte Hauptantriebsvorrichtung 25 nicht durch das Gehäuse 7 abgedeckt ist.

Wie in Fig. 2 zu sehen ist, umfasst die Hauptantriebsvorrichtung 25 eine antreibbare Welle 28. An der Welle 28 sind ein Bearbeitungsschlitten-Exzenter 30, der mit dem Bearbeitungsschlitten 15 verbunden ist, und ein Ausgleichsschlitten-Exzenter 40, der mit dem Ausgleichsschlitten 20 verbunden ist, angeordnet. Insbesondere sind der Bearbeitungsschlitten-Exzenter 30 und der Ausgleichsschlitten-Exzenter um 180° zueinander versetzt an der Welle 28 angeordnet.

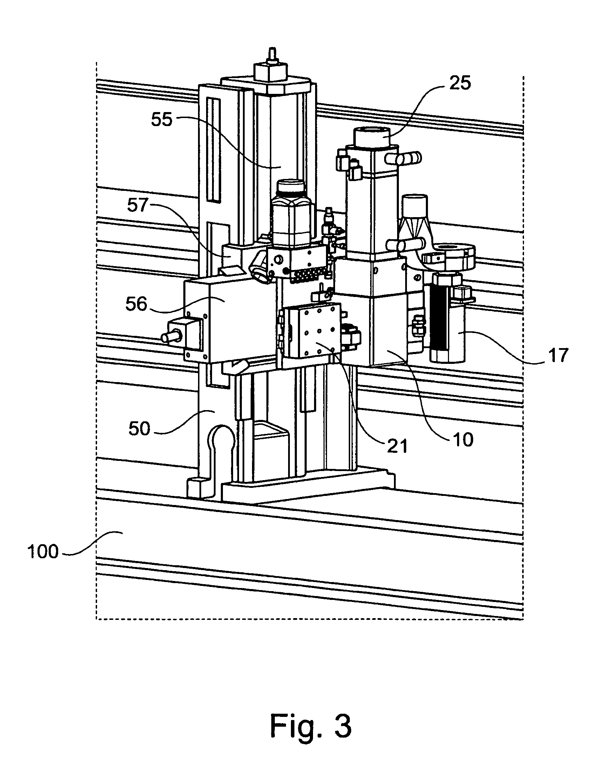

Der Bearbeitungsschlitten-Exzenter 30 ist mittels einer Welle-Nabe-Verbindung 31 an der Welle 28 angeordnet, und ähnlich ist der Ausgleichsschlitten-Exzenter 40 mittels einer Welle-Nabe-Verbindung 41 an der Welle 28 angeordnet. Bei der vorliegenden Ausführungsform sind die Welle-Nabe-Verbindungen 31, 41 jeweils in Form einer Passfeder-Verbindung ausgeführt. Die Art der Welle-Nabe-Verbindung 31, 41 ist jedoch nicht auf eine Passfeder-Verbindung beschränkt, sondern jede geeignete Welle-Nabe-Verbindung kann angewandt werden. Wie in Fig. 3 gezeigt, ist die Welle-Nabe-Verbindung 31 des Bearbeitungsschlitten-Exzenters 30 um 180° versetzt zu der Welle-Nabe-Verbindung 41 des Ausgleichsschlitten-Exzenters 40 an der Welle 28 angeordnet.

Ferner ist der Bearbeitungsschlitten-Exzenter 30 mittels einer Spannverbindung 32, hier in Form einer Spannhülse, verdrehfest und in Längsrichtung der Welle 28 unverschiebbar an der Welle 28 angeordnet. Ähnlich ist der Ausgleichsschlitten-Exzenter 40 mittels einer Spannverbindung 42, hier in Form einer Spannhülse, verdrehfest und in Längsrichtung der Welle 28 unverschiebbar an der Welle 28 angeordnet.

Zur Verbindung mit dem Bearbeitungsschlitten 15, weist der Bearbeitungsschlitten-Exzenter 30 eine erste Kurbelschwinge 33 auf, die über ein Lager 34 an dem Bearbeitungsschlitten-Exzenter 30 und drehbar an dem Bearbeitungsschlitten 15 angeordnet ist. Ähnlich weist der Ausgleichsschlitten-Exzenter 40 zur Verbindung mit dem Ausgleichsschlitten 20 eine zweite Kurbelschwinge 43 auf, die über ein Lager 44 an dem Ausgleichsschlitten-Exzenter 40 und drehbar an dem Ausgleichsschlitten 20 angeordnet ist.

Fig. 3 zeigt eine Perspektivansicht einer Bearbeitungsmaschine 100 gemäß der vorliegenden Erfindung. Die Bearbeitungsmaschine 100 umfasst eine Bearbeitungsvorrichtung 50, hier als F-Ständer ausgeführt, sowie das Bearbeitungsaggregat 10. Bei der in Fig. 4 gezeigten, beispielhaften Ausführungsform einer Bearbeitungsmaschine 100, ist an der Bearbeitungsmaschine 100 eine Führungsbahn 55 angeordnet. An dieser Führungsbahn 55 ist ein Vertikalschlitten 57 angeordnet, der vertikal, das heißt in Richtung der Höhenerstreckung der Bearbeitungsvorrichtung 50, verfahrbar ist. An dem Vertikalschlitten 57 ist wiederum ein Horizontalschlitten 56 angeordnet, der an dem Vertikalschlitten 57 in horizontaler Richtung, das heißt senkrecht zu der Richtung der Höhenerstreckung der Bearbeitungsvorrichtung 50, verfahrbar ist. An diesem Horizontalschlitten 56 ist das Bearbeitungsaggregat 10 angeordnet, so dass dieses durch den Horizontalschlitten 56 in horizontaler Richtung sowie durch den Vertikalschlitten 57 in vertikaler Richtung verfahrbar an der Bearbeitungsvorrichtung 50 angeordnet ist.

Die Bearbeitungsmaschine 100 ist vorzugsweise als Durchlaufmaschine ausgestaltet, wobei die Bearbeitungsvorrichtung 50 ortsfest angeordnet ist und zu bearbeitende Werkstücke beispielsweise über ein Förderband an der Bearbeitungsmaschine 100 vorbei geführt werden. Die entsprechende Positionierung des Bearbeitungsaggregats 10 in Bezug auf die eingeförderten Werkstücke kann hierbei flexibel durch den Vertikalschlitten 57 und den Horizontalschlitten 56 angepasst werden.

## Patentansprüche

1. Bearbeitungsaggregat (10) zum Bearbeiten von Werkstücken, die vorzugsweise zumindest teilweise Holz, Holzwerkstoffe, Kunststoff oder dergleichen umfassen, mit:
einem Bearbeitungsschlitten (15), der verfahrbar an dem Bearbeitungsaggregat (10) angeordnet ist, wobei der Bearbeitungsschlitten (15) zumindest ein Bearbeitungswerkzeug (16) und zumindest eine Antriebsvorrichtung (17) zum Antreiben des zumindest einen Bearbeitungswerkzeugs (16) umfasst,
einem Ausgleichsschlitten (20), der verfahrbar an dem Bearbeitungsaggregat (10) angeordnet ist, wobei der Ausgleichsschlitten (20) zumindest ein Ausgleichsgewicht (21) umfasst, wobei die Masse des Ausgleichsschlittens (20) und des Ausgleichsgewichts (21) im Wesentlichen derjenigen des Bearbeitungsschlittens (15), des Bearbeitungswerkzeugs (16) und der Antriebsvorrichtung (17) entspricht, und
zumindest einer Hauptantriebsvorrichtung (25) zum Antreiben des Bearbeitungsschlittens (15) und des Ausgleichsschlittens (20), wobei die zumindest eine Hauptantriebsvorrichtung (25) ausgestaltet ist, den Bearbeitungsschlitten (15) und den Ausgleichsschlitten (20) im Wesentlichen gleichzeitig in um 180° zueinander versetzte Richtungen an dem Bearbeitungsaggregat (10) zu verfahren, **dadurch gekennzeichnet, dass** die zumindest eine Hauptantriebsvorrichtung (25) einen Kurbeltrieb (27) mit einer antreibbaren Welle (28) umfasst, und wobei ein Bearbeitungsschlitten-Exzenter (30) zur Verbindung mit dem Bearbeitungsschlitten (15) und ein Ausgleichsschlitten-Exzenter (40) zur Verbindung mit dem Ausgleichsschlitten (20) um 180° zueinander versetzt an der Welle (28) angeordnet sind.

2. Bearbeitungsaggregat (10) nach Anspruch 1, wobei an dem Bearbeitungsaggregat (10) separate Führungsbahnen (12) für den Bearbeitungsschlitten (15) und den Ausgleichsschlitten (20) vorgesehen sind, an denen der Bearbeitungsschlitten (15) beziehungsweise der Ausgleichsschlitten (20) verfahrbar angeordnet sind.

3. Bearbeitungsaggregat (10) nach Anspruch 1 oder 2, wobei der Ausgleichsschlitten (20) mit zumindest einer Verbindungseinrichtung (22, 23) zum lösbaren Anbringen von Ausgleichsgewichten (21)unterschiedlicher Massen versehen ist.

4. Bearbeitungsaggregat (10) nach einem der Ansprüche 1 bis 3, wobei das Bearbeitungswerkzeug (16) ausgestaltet ist, eine Hauptbewegung in horizontaler Richtung, vertikaler Richtung oder einer beliebigen dazwischen liegenden Richtung auszuführen.

5. Bearbeitungsaggregat (10) nach einem der Ansprüche 1 bis 4, wobei zumindest eine erste und eine zweite Hauptantriebsvorrichtung vorgesehen sind, wobei die erste Hauptantriebsvorrichtung ausgestaltet ist, den Bearbeitungsschlitten (15) an dem Bearbeitungsaggregat (10) zu verfahren, und die zweite Hauptantriebsvorrichtung ausgestaltet ist, den Ausgleichsschlitten (20) im Wesentlichen gleichzeitig in eine um 180° zu dem Bearbeitungsschlitten (15) versetzte Richtung an dem Bearbeitungsaggregat (10) zu verfahren.

6. Bearbeitungsaggregat (10) nach Anspruch 5, wobei die erste und die zweite Hauptantriebsvorrichtung separat voneinander vorgesehen sind.

7. Bearbeitungsaggregat (10) nach einem der Ansprüche 1 bis 6, wobei die zumindest eine Hauptantriebsvorrichtung (25) als Linearantrieb ausgestaltet ist.

8. Bearbeitungsaggregat (10) nach Anspruch 1, wobei der Bearbeitungsschlitten-Exzenter (30) und der Ausgleichsschlitten-Exzenter (40) jeweils mittels einer Welle-Nabe-Verbindung (31, 41) an der Welle (28) angeordnet sind, und wobei die Welle-Nabe-Verbindung (31) des Bearbeitungsschlitten-Exzenters (30) um 180° versetzt zu der Welle-Nabe-Verbindung (41) des Ausgleichsschlitten-Exzenters (40) an der Welle (28) angeordnet ist.

9. Bearbeitungsaggregat (10) nach Anspruch 1 oder 8, wobei der Bearbeitungsschlitten-Exzenter (30) und der Ausgleichsschlitten-Exzenter (40) jeweils, vorzugsweise mittels einer Spannverbindung (32, 42), verdrehfest und in Längsrichtung der Welle (28) unverschiebbar an der Welle (28) angeordnet sind.

10. Bearbeitungsaggregat (10) nach einem der Ansprüche 1 oder 8 bis 9, wobei der Bearbeitungsschlitten-Exzenter (30) über eine erste Kurbelschwinge (33) mit dem Bearbeitungsschlitten (15) verbunden ist, und der Ausgleichsschlitten-Exzenter (40) über eine zweite Kurbelschwinge (43) mit dem Ausgleichsschlitten (20) verbunden ist, und wobei die erste und die zweite Kurbelschwinge (33, 43) jeweils über ein Lager (34, 44) an dem jeweiligen Exzenter (30, 40) und drehbar an dem jeweiligen Schlitten (15, 20) angeordnet sind.

11. Bearbeitungsmaschine (100) zum Bearbeiten von Werkstücken, die vorzugsweise zumindest teilweise Holz, Holzwerkstoffe, Kunststoff oder dergleichen umfassen, mit:
einer Bearbeitungsvorrichtung (50); und
einem Bearbeitungsaggregat (10) nach einem der Ansprüche 1 bis 10, das an der Bearbeitungsvorrichtung (50) angeordnet ist.

12. Bearbeitungsmaschine (100) nach Anspruch 11, wobei die Bearbeitungsvorrichtung (50) zumindest eine Führungsbahn (55) aufweist, an welcher das Bearbeitungsaggregat (10) verfahrbar angeordnet ist.

13. Bearbeitungsmaschine (100) nach Anspruch 11 oder 12, wobei die Bearbeitungsmaschine (100) eine Durchlaufmaschine ist.

14. Verfahren zum Bearbeiten von Werkstücken, die vorzugsweise zumindest teilweise Holz, Holzwerkstoffe, Kunststoff oder dergleichen umfassen, mit einem Bearbeitungsaggregat (10) nach einem der Ansprüche 1 bis 10, wobei, bei der Bearbeitung eines Werkstücks, der Bearbeitungsschlitten (15) und der Ausgleichsschlitten (20) im Wesentlichen gleichzeitig in um 180° zueinander versetzte Richtungen durch die zumindest eine Hauptantriebsvorrichtung (25) verfahren werden.

## Claims

1. Processing assembly (10) for processing workpieces which preferably at least partly comprise timber, derived timber products, plastic or the like, having:
a processing carriage (15) which is mounted movably on the processing assembly (10), wherein the processing carriage (15) comprises at least one processing tool (16) and at least one drive device (17) for driving the at least one processing tool (16),
a compensating carriage (20) which is mounted movably on the processing assembly (10), wherein the compensating carriage (20) comprises at least one compensating weight (21), wherein the weight of the compensating carriage (20) and of the compensating weight (21) substantially corresponds to that of the processing carriage (15), the processing tool (16) and the drive device (17), and
at least one main drive device (25) for driving the processing carriage (15) and the compensating carriage (20), wherein the at least one main drive device (25) is designed to move the processing carriage (15) and the compensating carriage (20) substantially simultaneously in directions offset from each other by 180° on the processing assembly (10), **characterised in that** the at least one main drive device (25) comprises a crank mechanism (27) with a drivable shaft (28), and wherein a processing carriage cam (30) for connection to the processing carriage (15) and a compensating carriage cam (40) for connection to the compensating carriage (20) are mounted on the shaft (28) offset from each other by 180°.

2. Processing assembly (10) according to claim 1, wherein on the processing assembly (10) are provided separate guide tracks (12) for the processing carriage (15) and the compensating carriage (20), on which the processing carriage (15) and the compensating carriage (20) respectively are mounted movably.

3. Processing assembly (10) according to claim 1 or 2, wherein the compensating carriage (20) is provided with at least one connection device (22, 23) for the releasable attachment of compensating weights (21) having different weights.

4. Processing assembly (10) according to any of claims 1 to 3, wherein the processing tool (16) is designed to perform a principal movement in a horizontal direction, vertical direction or any direction therebetween.

5. Processing assembly (10) according to any of claims 1 to 4, wherein at least one first and one second main drive device are provided, wherein the first main drive device is designed to move the processing carriage (15) on the processing assembly (10), and the second main drive device is designed to move the compensating carriage (20) substantially simultaneously in a direction offset from the processing carriage (15) by 180° on the processing assembly (10).

6. Processing assembly (10) according to claim 5, wherein the first and the second main drive device are provided separately from each other.

7. Processing assembly (10) according to any of claims 1 to 6, wherein the at least one main drive device (25) is designed as a linear drive.

8. Processing assembly (10) according to claim 1, wherein the processing carriage cam (30) and the compensating carriage cam (40) are in each case mounted on the shaft (28) by means of a shaft/hub connection (31, 41), and wherein the shaft/hub connection (31) of the processing carriage cam (30) is mounted on the shaft (28) offset by 180° from the shaft/hub connection (41) of the compensating carriage cam (40).

9. Processing assembly (10) according to claim 1 or 8, wherein the processing carriage cam (30) and the compensating carriage cam (40) are in each case mounted on the shaft (28) non-rotatably and non-displaceably in the longitudinal direction of the shaft (28), preferably by means of a clamping connection (32, 42).

10. Processing assembly (10) according to any of claims 1 or 8 to 9, wherein the processing carriage cam (30) is connected to the processing carriage (15) by a first crank rocker mechanism (33), and the compensating carriage cam (40) is connected to the compensating carriage (20) by a second crank rocker mechanism (43), and wherein the first and second crank rocker mechanisms (33, 43) are in each case mounted via a bearing (34, 44) on the respective cam (30, 40) and rotatably on the respective carriage (15, 20).

11. Processing machine (100) for processing workpieces which preferably at least partly comprise timber, derived timber products, plastic or the like, having:
a processing apparatus (50); and
a processing assembly (10) according to any of claims 1 to 10, which is mounted on the processing apparatus (50).

12. Processing machine (100) according to claim 11, wherein the processing apparatus (50) has at least one guide track (55) on which the processing assembly (10) is mounted movably.

13. Processing machine (100) according to claim 11 or 12, wherein the processing machine (100) is a continuous-throughput machine.

14. Method for processing workpieces which preferably at least partly comprise timber, derived timber products, plastic or the like, with a processing assembly (10) according to any of claims 1 to 10, wherein, during the processing of a workpiece, the processing carriage (15) and the compensating carriage (20) are moved by the at least one main drive device (25) substantially simultaneously in directions offset from each other by 180°.

## Revendications

1. Unité d'usinage (10) pour l'usinage de pièces d'oeuvre comprenant, de préférence au moins partiellement, du bois, des matériaux ligneux, de la matière synthétique ou analogue, avec :
un chariot d'usinage (15), disposé de manière déplaçable sur l'unité d'usinage (10), dans lequel le chariot d'usinage (15) comprend au moins un outil d'usinage (16) et au moins un dispositif d'entraînement (17), pour l'entraînement du au moins un outil d'usinage (16),
un chariot de compensation (20), disposé de manière déplaçable sur l'unité d'usinage (10), dans lequel le chariot de compensation (20) comprend au moins une masselotte de compensation (21), la masse du chariot de compensation (20) et de la masselotte de compensation (21) correspondant sensiblement à celle du chariot d'usinage (15), de l'outil d'usinage (16) et du dispositif d'entraînement (17), et
au moins un dispositif d'entraînement principal (25), pour l'entraînement du chariot d'usinage (15) et du chariot de compensation (20), le au moins un dispositif d'entraînement principal (25) étant équipé pour déplacer le chariot d'usinage (15) et le chariot de compensation (20) sensiblement simultanément dans des directions décalées à 180° l'une de l'autre sur l'unité d'usinage (10), **caractérisé en ce que** le au moins un dispositif d'entraînement principal (25) comprend un mécanisme à manivelle (27) avec un arbre (28) susceptible d'être entrainé, et un excentrique pour chariot d'usinage (30), pour assurer la liaison au chariot d'usinage (15), et un excentrique pour chariot d'équilibrage (40), pour assurer la liaison au chariot d'équilibrage (20), étant disposés sur l'arbre (28), de manière décalée à 180° l'un de l'autre.

2. Unité d'usinage (10) selon la revendication 1, sur l'unité d'usinage (10) étant prévues des pistes de guidage (12) séparées, pour le chariot d'usinage (15) et le chariot de compensation (20), sur lesquelles le chariot d'usinage (15), respectivement le chariot de compensation (20), sont disposés de manière déplaçable.

3. Unité d'usinage (10) selon la revendication 1 ou 2, dans laquelle le chariot de compensation (20) est muni d'au moins un dispositif de liaison (22, 23), pour assurer le montage désolidarisable de masselottes de compensation (21) à masses de valeurs différentes.

4. Unité d'usinage (10) selon l'une des revendications 1 à 3, dans laquelle l'outil d'usinage (16) est équipé pour effectuer un mouvement principal en direction horizontale, en direction verticale ou une direction quelconque entre celles-ci.

5. Unité d'usinage (10) selon l'une des revendications 1 à 4, au moins un premier et un deuxième dispositif d'entraînement principal étant prévus, le premier dispositif d'entraînement principal étant équipé pour déplacer le chariot d'usinage (15) sur l'unité d'usinage (10), et le deuxième dispositif d'entraînement principal étant équipé pour déplacer le chariot de compensation (20) sensiblement simultanément, dans une direction décalée à 180° vis-à-vis du chariot d'usinage (15) sur l'unité d'usinage (10).

6. Unité d'usinage (10) selon la revendication 5, dans laquelle le premier et le deuxième dispositif d'entraînement principal sont prévus séparément l'un de l'autre.

7. Unité d'usinage (10) selon l'une des revendications 1 à 6, dans laquelle le au moins un dispositif d'entraînement principal (25) est réalisé sous forme d'entraînement linéaire.

8. Unité d'usinage (10) selon la revendication 1, dans laquelle l'excentrique pour chariot d'usinage (30) et l'excentrique pour chariot d'équilibrage (40) sont chacun disposés sur l'arbre (28), au moyen d'une liaison arbre-moyeu (31, 41), et la liaison arbre-moyeu (31) de l'excentrique pour chariot d'usinage (30) est disposés sur l'arbre (28), décalée à 180° de la liaison arbre-moyeu (41) l'excentrique pour chariot d'équilibrage (40).

9. Unité d'usinage (10) selon la revendication 1 ou 8, dans laquelle l'excentrique pour chariot d'usinage (30) et l'excentrique pour chariot d'équilibrage (40) sont chacun disposés sur l'arbre (28), de manière assujettie en rotation, de préférence au moyen d'une liaison à serrage (32, 42) et de manière indéplaçable dans la direction longitudinale de l'arbre (28).

10. Unité d'usinage (10) selon l'une des revendications 1 ou 8 à 9, dans laquelle l'excentrique pour chariot d'usinage (30) est relié au chariot d'usinage (15) par un premier mécanisme oscillant à bielle (33), et l'excentrique pour chariot d'équilibrage (40) est relié au chariot de compensation (20) par un deuxième mécanisme oscillant à bielle (43), le premier et le deuxième mécanismes oscillants à bielle (33, 43) étant disposés sur l'excentrique (30, 40) respectif, chaque fois par l'intermédiaire d'un palier (34, 44), et de manière à pouvoir tourner sur le chariot (15, 20) respectif.

11. Machine d'usinage (100) pour l'usinage de pièces d'oeuvre comprenant, de préférence au moins partiellement, du bois, des matériaux ligneux, de la matière synthétique ou analogue, avec :
un dispositif d'usinage (50) ; et
une unité d'usinage (10) selon l'une des revendications 1 à 10, disposée sur le dispositif d'usinage (50).

12. Machine d'usinage (100) selon la revendication 11, dans laquelle le dispositif d'usinage (50) présente au moins une piste de guidage (55), sur laquelle l'unité d'usinage (10) est disposée de manière déplaçable.

13. Machine d'usinage (100) selon la revendication 11 ou 12, dans laquelle la machine d'usinage (100) est une machine à fonctionnement continu.

14. Procédé d'usinage de pièces d'oeuvre comprenant, de préférence au moins partiellement, du bois, des matériaux ligneux, de la matière synthétique ou analogue, avec une unité d'usinage (10) selon l'une des revendications 1 à 10, dans lequel, lors de l'usinage d'une pièce d'oeuvre, le chariot d'usinage (15) et le chariot de compensation (20) sont déplacés sensiblement simultanément dans des directions décalées à 180° l'une de l'autre, au moyen du au moins un dispositif d'entraînement principal (25).
